# EUROPÄISCHE PATENTSCHRIFT

(11) **EP 4 349 572 B1**
(45) Veröffentlichungstag und Bekanntmachung des Hinweises auf die Patenterteilung: **17.12.2025**
(21) Anmeldenummer: 23020457.0
(22) Anmeldetag: 04.10.2023
(51) Int. Cl.: B29C 65/14, B29C 65/48

(54) **VERFAHREN ZUR LOKALEN HAFTUNGSBEEINFLUSSUNG ZWISCHEN EINEM SILIKONWERKSTOFF UND EINEM THERMOPLASTEN**
METHOD FOR LOCALLY INFLUENCING ADHESION BETWEEN A SILICONE MATERIAL AND A THERMOPLASTIC
MÉTHODE POUR INFLUENCER LOCALEMENT L'ADHÉSION ENTRE UN MATÉRIAU SILICONE ET UN THERMOPLASTIQUE

(30) Priorität: 05.10.2022 DE 102022125594
(43) Veröffentlichungstag der Anmeldung: 10.04.2024
(73) Patentinhaber: RICO Group GmbH, 4600 Thalheim bei Wels (AT)
(72) Erfinder: Hartung, Michael, 34593 Knüllwald (DE); Giesen, Ralf-Urs, 34323 Malsfeld (DE); Heim, Hans-Peter, 33332 Gütersloh (DE); Klier, Kevin, 34323 Malsfeld (DE); Riemann, Niklas, 36211 Alheim (DE); Schlitt, Christof, 34621 Obergrenzebach (DE)
(74) Vertreter: SONN Patentanwälte GmbH & Co KG

(56) Entgegenhaltungen:
- DE-A1- 102016 002 011
- US-A1- 2014 041 800

## Beschreibung

Die Erfindung betrifft ein Verfahren zur Beeinflussung der Haftung von Silikon auf der Oberfläche eines Thermoplasten.

### STAND DER TECHNIK

Aus der US 8,293,061 B2 ist ein Verfahren zum Bonden von zwei thermoplastischen Oberflächen bekannt, und es wird angegebenen, dass die thermoplastischen Oberflächen mit UV-C-Strahlung bestrahlt werden können, um die Oberflächen zu aktivieren. Dadurch wird die Bondfestigkeit der thermoplastischthermoplastischen Verbindung erhöht. Eine derartige Oberflächenaktivierung basiert auf der Erzeugung von Sauerstoffradikalen aus der Luft, die mit Radikalen an der Materialoberfläche reagieren. Dadurch entsteht eine chemisch veränderte Oberfläche des Thermoplasten. Folglich können die beiden Thermoplastoberflächen aufeinander gebracht und im Bondverfahren miteinander verbunden werden.

Weiters bilden die Veröffentlichungen DE 10 2016 002011 A1 sowie US 2014/041800 A1 den technischen Hintergrund zum Gegenstand der vorliegenden Erfindung.

Sollen ungleiche Materialien miteinander verbunden werden, also beispielsweise ein Silikon und ein Thermoplast, so sind verschiedene Aktivierungsverfahren bekannt, um die Oberfläche des Thermoplasten zu aktivieren, damit eine Haftungsverbesserung des Silikons erreicht wird. Dabei soll das Silikon beispielsweise im Spritzgussverfahren auf die Oberfläche des Thermoplasten aufgebracht werden. Bekannt sind Haftvermittler, die als Additivierung im Werkstoff des Thermoplasten vorliegen können. Ebenfalls ist es bekannt, den Werkstoff des Silikons entsprechend zu additivieren, um einen Haftvermittler aus dem Fügepartner selbst bereitzustellen. Nachteilhafterweise führen derartige Additivierungen zu einer erheblichen Kostensteigerung bei der Beschaffung entsprechend additivierter Thermoplasten oder Silikone.

Insbesondere soll die Verwendung von vor dem Fügen auf die Oberfläche auftragbaren Haftvermittlern, auch Primer genannt, vermieden werden, da die Verwendung einen weiteren Prozessschritt erfordert und/oder eine nur lokale Aufbringung eines Haftvermittlers einen zusätzlichen Anlagenaufwand bedeuten kann.

Mit den verschiedenen aus dem Stand der Technik bekannten Verfahren zur Oberflächenaktivierung eines Thermoplasten für die Haftvermittlung zu einem Silikon gehen verschiedene Nachteile einher. Beispielsweise kann es bei thermischen Verfahren wie das Beflammen zu einem Verzug des Werkstückes kommen, ebenfalls können sich Farbveränderungen der Oberfläche ergeben. Bei einer Plasmatechnik oder einer Koronabehandlung sind aufwendige Anlagentechniken erforderlich, und es entstehen insbesondere bei hohen elektrischen Spannungen von Anlagenbauteilen Gefahren für den Bediener.

Wünschenswert sind insbesondere lokal begrenzte Bereiche, in denen eine Haftung eines Silikons auf der Oberfläche eines Thermoplasten bei der Aufbringung des Silikons stattfindet und die sich von Bereichen abgrenzen lassen, in denen die Haftung nicht stattfindet.

### OFFENBARUNG DER ERFINDUNG

Es ist die Aufgabe der Erfindung, ein Verfahren zur Beeinflussung der Haftung von Silikon auf der Oberfläche eines Thermoplasten zu entwickeln, mit dem die Nachteile des vorstehend beschriebenen Standes der Technik vermieden werden und das mit einfachen Mitteln ausgeführt werden kann und entsprechend wirkungsvoll ist. Insbesondere sollen auf einfache Weise auf der Oberfläche des Thermoplasten Bereiche geschaffen werden, die bei einer Aufbringung eines Silikons eine Anhaftung ermöglichen und es sollen Bereiche geschaffen werden, die keine Haftung aufweisen.

Diese Aufgabe wird ausgehend von einem Verfahren gemäß dem Oberbegriff des Anspruches 1 und ausgehend von einem Verbundbauteil gemäß Anspruch 10 mit den jeweils kennzeichnenden Merkmalen gelöst. Vorteilhafte Weiterbildungen der Erfindung sind in den abhängigen Ansprüchen angegeben.

Die Erfindung sieht für die Ausführung des Verfahrens wenigstens die folgenden Schritte vor: lokales Bestrahlen der Oberfläche mit UV-Strahlung, wodurch chemische Gruppen des Thermoplasten von einem aktiven Zustand in einen inaktiven Zustand überführt werden durch eine vollständige Absorption der UV-Strahlung vom Thermoplasten innerhalb weniger Mikrometer in der Oberfläche; wobei die Photonenenergie der aufgebrachten UV-Strahlung größer als die atomaren Bindungsenergien in den Thermoplasten ist, gefolgt von einer Photodegradation in der Oberfläche und einer Verringerung der molaren Masse der Randschicht, und wobei die nachfolgenden Schritte vorgesehen sind: Aufbringen des Silikons auf die Oberfläche, wobei a) in den Bereichen der Bestrahlung keine Anhaftung des Silikons auf der Oberfläche erfolgt und b) in den Bereichen ohne Bestrahlung eine Anhaftung des Silikons auf der Oberfläche erfolgt, sodass in den bestrahlten Bereichen eine Nicht-Haftung von Silikon auf der Oberfläche des Thermoplasten aufgrund einer Delamination des Silikons mit der Oberfläche des Thermoplasten erzeugt wird.

Kerngedanke der Erfindung ist nicht die Aktivierung der Oberfläche des Thermopolasten mit UV-Strahlung, sondern eine Deaktivierung, da überraschend festgestellt wurde, dass mit einer UV-Bestrahlung der Oberfläche chemische Gruppen des Thermoplasten von einem aktiven Zustand in einen inaktiven Zustand überführt werden können. Wird anschließend das Silikon auf der Oberfläche des Thermoplasten aufgebracht, insbesondere im Spritzguss, so können die nicht bestrahlten, auch zuvor schon aktiv vorliegenden Bereiche der Oberfläche zu einer Haftung des Silikons führen, und die mit der UV-Strahlung inaktivierten Bereiche der Oberfläche führen zu einer Nicht-Haftung des Silikons auf der Oberfläche des Thermoplasten. So können auf einfache Weise auf einer Oberfläche des Thermoplasten Bereiche geschaffen werden, in denen das später aufgebrachte Silikon anhaftet und es können Bereiche vorgesehen werden, in denen das Silikon eben nicht anhaftet. Dadurch können auf einfache Weise Bereiche unterschiedlicher Funktion des ansonsten einteiligen Silikonkörpers auf dem Thermoplasten erreicht werden, beispielsweise können in den Bereichen der Haftung des Silikons auf der Oberfläche mediendichte Verbindungen geschaffen werden, oder es können Bereiche des Silikons für die Befestigung von Funktionselementen geschaffen werden. Beispielsweise bei Ventilen können Ventilkörper in einem Bereich an der Oberfläche anhaften und in einem benachbarten Bereich, wo die eigentliche Ventilwirkung stattfindet, nicht anhaften und der aus Silikon bestehende Ventilkörper kann lediglich über der oder angrenzend an der Oberfläche des Thermoplasten vorhanden sein, ohne dass eine Haftung des Silikons auf der Oberfläche stattfindet, beispielsweise zur Bildung eines Flatterventils.

Der Thermoplast weist eine Spezifikation mit aktiven chemischen Gruppen auf, wobei die aktiven chemischen Gruppen mittels der UV-Bestrahlung inaktiviert werden. Der Effekt der Inaktivierung hat sich überraschend gezeigt, wobei die Differenzierung von der Aktivierung einer Oberfläche eines Thermoplasten mittels einer UV-Bestrahlung und der Inaktivierung sowohl von der Parametrierung der Bestrahlung als auch von den Spezifikationen des Thermoplasten abhängt. Beispielsweise sind Polybutylenterephthalat (PBT) oder auch ein Polyamid (PA) geeignet, um durch UV-Bestrahlung eine Inaktivierung der bestrahlten Bereiche der Oberfläche zu erreichen.

Die UV-Strahlung wird bei den genannten Thermoplasten innerhalb weniger Mikrometer in der Oberfläche vollständig absorbiert. Gleichzeitig ist die Photonenenergie der UV-Strahlung größer als die meisten atomaren Bindungsenergien in den Thermoplasten. Dies führt zu einer starken Photodegradation in der Oberfläche und bei andauernder UV-Bestrahlung zu einer starken Verringerung der molaren Masse der Randschicht. Wird nun ein LSR auf die Oberfläche aufgebracht und vulkanisiert, so findet zwar eine Anbindung an die oberflächennahen Schichten im Thermoplast statt, diese sind jedoch nur schwach mit den tieferliegenden Polymerketten verankert und eine Delamination des LSR und der Thermoplastoberfläche tritt bei geringer Belastung ein.

Mit anderen Worten zielt die Erfindung darauf ab, auf der Oberfläche des Thermoplasten Bereiche zu erzeugen, die keine aktiven Gruppen haben, um mit dem Silikon, insbesondere Silikonkautschuk, zu reagieren. Hierdurch können vor allem im Mehrkomponenten-Spritzgießverfahren Verbundbauteile mit integrierten Funktionen hergestellt werden. Neben den Ventilen können auch Pumpen, Griffe, Kanäle oder dergleichen mit Thermoplast-Silikon-Verbundbauteilen hergestellt werden.

Auf oder über der Oberfläche des Thermoplasten kann eine Maske angeordnet werden, die Bereiche aufweist, in denen die UV-Strahlung passieren kann und die Oberfläche bestrahlt und die Bereiche aufweist, in denen die UV-Strahlung auf der Oberfläche abgeschattet wird. Die UV-Strahlung kann alternativ zur Maske auch mittels einer Strahlungsquelle erzeugt werden, die während der Bestrahlung über der Oberfläche des Thermoplasten bewegt wird und die Bereiche bestrahlt, in denen die chemischen Gruppen auf der Oberfläche des Thermoplasten inaktiviert werden sollen. Auch ist eine Kombination der Verfahren denkbar, sodass eine Maske über der Oberfläche des Thermoplasten angeordnet wird, und die Strahlungsquelle, die beispielsweise die UV-Strahlung linienförmig emittiert, wird über der Oberfläche des Thermoplasten verfahren, um mit der linienförmigen UV-Strahlung schließlich die gesamte Fläche des Thermoplasten zu bestrahlen, ausgenommen der Schattenbereiche der Maske. Ebenso kann der Thermoplastkörper relativ zur Strahlungsquelle bewegt werden.

Zudem ist es denkbar, dass die UV-Strahlung über der Oberfläche des Thermoplasten mittels eines Scanners bewegt wird, sodass über dem Scanner auch nur die Bereiche des Thermoplasten bestrahlt werden, die inaktiviert werden sollen, um die Nicht-Haftung des Silikons auf dem Thermoplasten lokal in den inaktivierten Bereichen zu schaffen.

Ferner kann vorgesehen sein, dass die Bestrahlung der Oberfläche des Thermoplasten innerhalb einer nach außen abgedunkelten Bestrahlungskammer ausgeführt wird, sodass bei der Bestrahlung der Oberfläche des Thermoplasten sich bildendes Ozon während der Bestrahlung mit der Oberfläche wechselwirkt. Beispielsweise kann die UV-Strahlung durch eine transparente Scheibe in die Bestrahlungskammer und insofern auf die Oberfläche des Thermoplasten eingestrahlt werden. Zur Verstärkung des Effektes der Wechselwirkung des Ozons mit der Oberfläche des Thermoplasten kann zudem vorgesehen sein, dass die Bestrahlungskammer in ihrer Geometrie entsprechend optimiert wird, um möglichst eine intensive Wechselwirkung des Ozons mit der Oberfläche sicherzustellen. Beispielsweise wird die Bestrahlungskammer in der Größe so klein gewählt, dass eine möglichst hohe Konzentration des Ozons über der Oberfläche des Thermoplasten vorherrscht. Beispielsweise ist es möglich, im Mehrkomponenten-Spritzgussverfahren zunächst den Thermoplasten in eine entsprechende Form zu spritzen, um anschließend das Spritzgusswerkzeug zu öffnen und die Bestrahlungsquelle über die Oberfläche des Thermoplasten zu bewegen, insbesondere unter Hinzufügung einer Maske. Die Strahlungsquelle kann dabei so abgeschlossen ausgeführt sein, dass durch das Bewegen der Strahlungsquelle über die Oberfläche des Thermoplasten die Bestrahlungskammer bereits gebildet wird. Die Maske kann dabei noch innerhalb der Bestrahlungskammer zwischen Strahlungsquelle und Oberfläche des Thermoplasten angeordnet sein.

Die Bestrahlung der Oberfläche des Thermoplasten erfolgt insbesondere mit einer UV-C-Strahlung, vorzugsweise mit einer Wellenlänge im Bereich von 100 nm bis 280 nm. Die Bestrahlung der Oberfläche des Thermoplasten mit der UV-C-Strahlung kann besonders vorteilhaft mit einer Dauer im Bereich von 1 Sekunde bis 3.600 Sekunden ausgeführt werden. Die Leistung der UV-C-Strahlungsquelle kann zwischen 1 Watt und 10.000 Watt liegen, wobei bei sehr hoher Leistung im Bereich bis zu 10.000 Watt eine sehr kurze Bestrahlungsdauer gewählt wird, und bei sehr niedrigen Leistungen der Strahlungsquelle werden sehr lange Bestrahlungsdauern gewählt. Der Energieeintrag in die Oberfläche des Thermoplasten muss dabei lediglich hinreichend sein, um die aktiven chemischen Gruppen zu inaktivieren.

Der Thermoplast wird beispielsweise mit einem Werkstoff, umfassend ein Polyamid, PBT, PMMA, PET, PVC, PS, PP oder PE bereitgestellt. Insbesondere kann das Silikon ein Liquid Silicone Rubber oder ein High Consistency Silicone Rubber aufweisen. Insbesondere bei Thermoplasten betreffend Polybutylenterephthalat (PBT) und Polyamid (PA) hat sich der Effekt besonders gut einstellen lassen, dass mit einer UV-Bestrahlung der Oberfläche dieser Thermoplasten die chemischen Gruppen inaktiviert werden, und eine besonders guten Nicht-Haftung erreicht wird, insbesondere auch wenn das Silikon im Mehrkomponenten-Spritzgussverfahren an den bereits gespritzten Thermoplasten angespritzt wird.

Das Verfahren ist insbesondere dadurch gekennzeichnet, dass das Silikon im Spritzgießverfahren, im Extrusionsverfahren oder im Transfer-Molding-Verfahren auf die lokal bestrahlte Oberfläche des Thermoplasten aufgebracht wird. Der Effekt der inaktivierten chemischen Gruppen und der damit einhergehenden Nicht-Haftung des Silikons wird besonders deutlich, wenn das Silikon im Mehrkomponenten-Spritzgießverfahren an den bereits mittels Kunststoffspritzen hergestellten Thermoplasten angespritzt wird.

Die Erfindung richtet sich weiterhin auf ein Verbundbauteil aus einem Thermoplasten und einem auf einer Oberfläche des Thermoplasten angeordneten Silikon, wobei die Oberfläche mit dem vorstehenden Verfahren lokal deaktiviert wurde, sodass in den bestrahlten Bereichen eine Nicht-Haftung von Silikon auf der Oberfläche des Thermoplasten gebildet wurde. Die Besonderheit des Verbundbauteils kann es dabei sein, dass das Silikon einen Silikonkörper bildet, der in Wechselwirkung mit der Oberfläche des Thermoplasten verschiedene integrierte Funktionen erfüllen kann. Beispielsweise können Bereiche des an sich flexiblen, biegsamen Silikonkörpers von der Oberfläche des Thermoplasten unter elastischer Verformung abheben und damit eine Funktion erfüllen, während in anderen Bereichen zwischen dem Silikon und der Oberfläche des Thermoplasten eine Anhaftung erfolgt, etwa um das Silikon am Thermoplasten zu binden. Mit solchen Funktionen lassen sich beispielsweise Ventile oder beispielsweise Mediendosierer erzeugen, insbesondere, wenn Teile des Silikonkörpers von der Oberfläche des Thermoplasten abheben können, um eine Ventilfunktion zu erfüllen, und es kann durch elastische Verformung des Silikons ein Volumen zwischen dem Silikonkörper und der Oberfläche des Thermoplasten erzeugt werden, das zur Medienaufnahme dienen kann.

So richtet sich die Erfindung weiterhin auf ein Verbundbauteil, wobei das Verbundbauteil beispielsweise ein Ventil bildet, wobei der Thermoplast einen formstabilen Grundkörper und das Silikon einen flexiblen Ventilkörper des Ventils bilden, wobei der flexible Ventilkörper mit dem Grundkörper im Bereich a), in dem durch Bestrahlung die Oberfläche des Grundkörpers keine Anhaftung für Silikon aufweist, einen beweglichen Verschlussabschnitt des Ventils bildet und im Bereich b), in dem ohne Bestrahlung eine Anhaftung des Ventilkörpers auf der Oberfläche des Grundkörpers erfolgt, der flexible Ventilkörper einen Verbindungsabschnitt mit dem Grundkörper bildet. Solche Ventile werden als Flatterventile oder auch als Rückschlagventile bezeichnet, wobei der Verschlussabschnitt einen Flap bildet und eine Öffnung in der Oberfläche des Thermoplasten verschließen kann, und das Öffnen erfolgt durch elastische Verformung des Flaps, der durch einen Abschnitt des Silikons gebildet ist.

Auch ist es denkbar, dass das Verbundbauteil beispielsweise einen Mediendosierer bildet, wobei der Thermoplast einen formstabilen Grundkörper und das Silikon einen flexiblen Dehnungskörper des Mediendosierers bildet, wobei der flexible Dehnungskörper mit dem Grundkörper im Bereich a), in dem durch Bestrahlung die Oberfläche des Grundkörpers keine Anhaftung des Dehnungskörpers aufweist, einen Dehnungsabschnitt bildet und im Bereich b), in dem ohne Bestrahlung eine Anhaftung des Dehnungskörpers auf der Oberfläche des Grundkörpers erfolgt, der flexible Dehnungskörper einen Verbindungsabschnitt mit dem Grundkörper bildet.

### BEVORZUGTES AUSFÜHRUNGSBEISPIEL DER ERFINDUNG

Weitere, die Erfindung verbessernde Maßnahmen werden nachstehend gemeinsam mit der Beschreibung eines bevorzugten Ausführungsbeispiels der Erfindung anhand der Figuren näher dargestellt. Es zeigt:
- Figur 1: eine schematische Ansicht eines Thermoplasten mit einer Oberfläche, die gemäß Teilansicht a) mittels einer Maske lokal aus einer Strahlungsquelle mit UV-Strahlung bestrahlt wird und auf die gemäß Teilansicht b) ein Silikon aufgebracht wird, um ein Verbundbauteil zu bilden,
- Figur 2: eine schematische Ansicht eines Thermoplasten mit einer Oberfläche, die gemäß Teilansicht a) mittels einer beweglichen Strahlungsquelle lokal mit UV-Strahlung bestrahlt wird und auf die gemäß Teilansicht b) ein Silikon aufgebracht wird, um ein Verbundbauteil zu bilden,
- Figur 3: eine Bestrahlungskammer zur Bestrahlung der Oberfläche des Thermoplasten mit UV-Strahlung unter verbesserter Einwirkung von Ozon auf die Oberfläche,
- Figur 4: in der Teilansicht a) ein Verbundbauteil am Beispiel eines Ventils mit einem Silikonkörper als flexibler Ventilkörper, in der Teilansicht b) eine Seitenansicht des Ventils mit einem geschlossenen Ventilkörper und in der Teilansicht c) eine Seitenansicht des Ventils mit einem geöffneten Ventilkörper,
- Figur 5: in der Teilansicht a) ein Verbundbauteil am Beispiel eines Mediendosierers mit einem Silikonkörper als Dehnungskörper, in der Teilansicht b) eine Seitenansicht des Mediendosierers mit einem nicht mit Druck beaufschlagten Dehnungskörper und in der Teilansicht c) eine Seitenansicht des Mediendosierers mit einem mit Druck beaufschlagten Dehnungskörper.

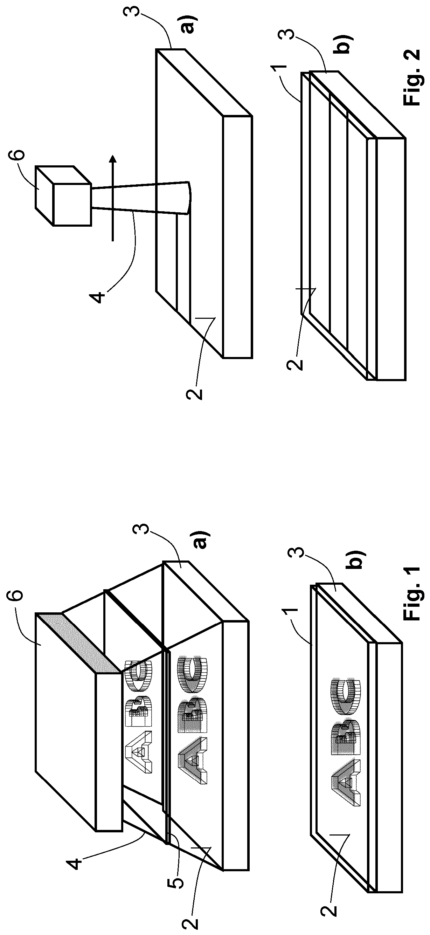

Figur 1 zeigt in der Teilansicht a) eine schematische Ansicht eines Thermoplasten 3 mit einer Oberfläche 2, und parallel beabstandet zur Oberfläche 2 ist eine Maske 5 angeordnet. Über der Maske 5 befindet sich eine Strahlungsquelle 6 zur Aussendung von UV-Strahlung, beispielsweise UV-C-Strahlung 4.

Die Maske besitzt durchlässige Bereiche, die beispielhaft mit A-B-C dargestellt sind. Wird die Strahlungsquelle 6 eingeschaltet und beleuchtet diese die Maske 5 mit der UV-C-Strahlung 4, so wird der Teil der Oberfläche 2 unterhalb der Struktur A-B-C mit der UV-C-Strahlung 4 bestrahlt und der weitere Teilbereich, der von der Maske 5 abgeschattet ist, wird nicht bestrahlt.

In der Teilansicht b) ist auf die Oberfläche 2 des Thermoplasten 3 ein Silikon 1 aufgetragen worden, beispielsweise im Mehrkomponenten-Spritzgießverfahren, mittels dem das Silikon 1 an den Thermoplasten 3 angespritzt wird. In den Bereichen der Buchstaben A, B und C, in denen die UV-C-Strahlung die Oberfläche 2 bestrahlt hat, sind chemische Gruppen auf der Oberfläche 2 des Thermoplasten 3 inaktiviert worden, sodass in diesen Bereichen keine Anhaftung des Silikons 1 auf der Oberfläche 2 erfolgt. In den Bereichen, in denen die Maske 5 die Oberfläche 2 des Thermoplasten 3 von der UV-C-Strahlung 4 abgeschattet hat, sind die chemischen Gruppen auf der Oberfläche 2 des Thermoplasten 3 im aktiven Zustand verblieben, sodass in diesen Bereichen eine Anhaftung des Silikons 1 auf der Oberfläche 2 erfolgt. So kann in den bestrahlten Bereichen eine Nichthaftung des Silikons 1 auf der Oberfläche 2 des Thermoplasten 3 erzeugt werden.

Figur 2 zeigt in der Teilansicht a) eine alternative Form der lokalen, selektiven Bestrahlung der Oberfläche 2 des Thermoplasten 3 mittels einer beweglichen Strahlungsquelle 6. Wird die Strahlungsquelle 6 über die Oberfläche 2 bewegt, alternativ auch mit einem Scanner, der die UV-C-Strahlung 4 lokal auf die Oberfläche 2 des Thermoplasten 3 treffen lässt, können ebenfalls Bereiche erzeugt werden, die von der UV-C-Strahlung 4 bestrahlt werden und Bereiche, die nicht bestrahlt werden. Wird gemäß der Teilansicht b) nun das Silikon 1 auf der Oberfläche 2 angeordnet, so entsteht beispielhaft ein streifenförmiger mittlerer Bereich, der von der UV-C-Strahlung 4 bestrahlt wurde, und in diesem Bereich wurden die chemischen Gruppen des Thermoplasten 3 in einen inaktiven Zustand überführt, in dem schließlich das Silikon 1 auf der Oberfläche 2 des Thermoplasten 3 nicht anhaftet. Der diesen Bereich umrandende weitere Bereich, der nicht von der UV-C-Strahlung 4 bestrahlt wurde, führt zu einer Anhaftung des Silikons 1 auf der Oberfläche 2.

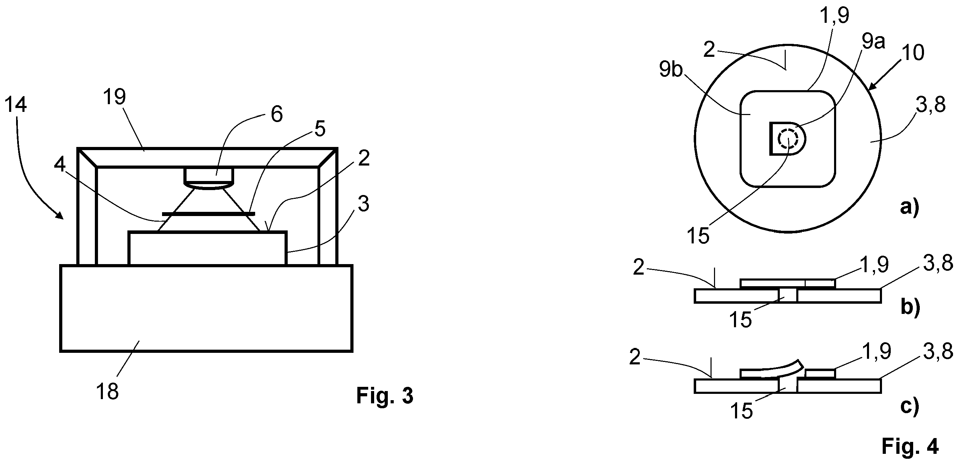

Figur 3 zeigt in einer vereinfachten Seitenansicht eine Bestrahlungskammer 14 mit einem in dieser eingebrachten Thermoplasten 3, und mit der Strahlungsquelle 6 kann die Oberfläche 2 des Thermoplasten 3 mit UV-C-Strahlung 4 bestrahlt werden. Der Unterteil der Bestrahlungskammer 14 kann beispielsweise eine erste Hälfte 18 eines Spritzgusswerkzeuges sein, das gegenüber einer nicht dargestellten weiteren Hälfte des Spritzgusswerkzeuges geöffnet ist, und der haubenartige Teil 19 der Bestrahlungskammer 14 mit der Strahlungsquelle 6 wird zwischen die geöffneten Hälften des Spritzgusswerkzeuges gefahren, um den Zwischenschritt der Bestrahlung mit der UV-C-Strahlung 4 auszuführen. Anschließend kann der haubenartige Teil 19 der Bestrahlungskammer 14 wieder aus den Hälften des Spritzgusswerkzeuges entfernt werden, und das nicht dargestellte Silikon kann auf die Oberfläche 2 angespritzt werden.

Figur 4 zeigt in der Teilansicht a) ein Verbundbauteil 100 am Beispiel eines Ventils 10, wobei das Ventil 10 einen formstabilen Grundkörper 8 aufweist, auf dem ein flexibler Ventilkörper 9 angeordnet wird. Der formstabile Grundkörper 8 wird durch den Thermoplast 3 gebildet, und der flexible Ventilkörper 9 durch das Silikon 1. Die Teilansicht b) zeigt eine Seitenansicht des Ventils 10 mit einem geschlossenen Ventilkörper 9 und die Teilansicht c) zeigt die Seitenansicht des Ventils 10 mit einem geöffneten Ventilkörper 9.

Der flexible Ventilkörper 9 kann in zwei Bereiche unterteilt werden, nämlich in den Verschlussabschnitt 9a und in den Verbindungsabschnitt 9b. Der Verschlussabschnitt 9a überdeckt eine Öffnung 15 innerhalb des formstabilen Grundkörpers 8, und verschließt diesen aufgrund seiner Eigenelastizität, indem sich der flexible Verschlussabschnitt 9a auf die Oberfläche 2 des Thermoplasten 3 anlegt, der den Ventilkörper 9 bildet. Das Verfahren der selektiven Bestrahlung der Oberfläche 2 mit UV-C-Strahlung kann für diesen Anwendungsfall besonders vorteilhaft genutzt werden, da ein einteiliger flexibler Ventilkörper 9 bereichsweise an der Oberfläche 2 anhaften kann, und bereichsweise wird die Haftung vermieden, sodass beispielsweise rund um die Öffnung 15 die Bestrahlung mit der UV-C-Strahlung erfolgt, sodass in diesem Bereich die Haftung unterbunden bleibt, und in den nicht bestrahlten Bereichen haftet das Silikon 1 auf der Oberfläche 2, sodass der Verschlussabschnitt 9a beweglich über der Oberfläche 2 bleibt, während der Verbindungsabschnitt 9b des Ventilkörpers 9 mit der Oberfläche 2 fest verbunden ist.

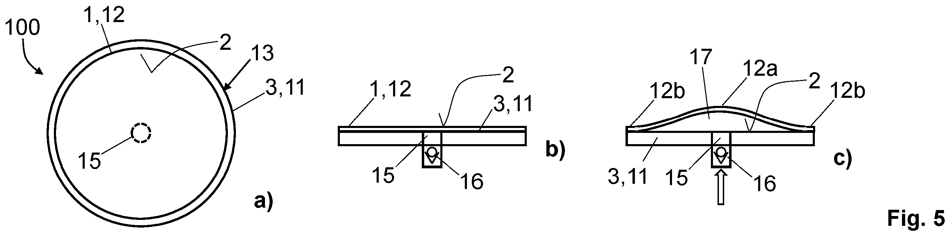

Figur 5 zeigt schließlich ein noch weiteres Ausführungsbeispiel eines Verbundbauteils 100, das als Mediendosierer 13 ausgebildet ist. Der Mediendosierer 13 weist einen formstabilen Grundkörper 11 auf, der durch den Thermoplasten 3 gebildet ist, und es ist ein Dehnungskörper 12 auf der Oberfläche 2 des Thermoplasten 3 aufgebracht, der aus dem Silikon 1 ausgebildet ist.

Die Teilansicht a) zeigt den Mediendosierer 13 in einer Draufsicht, und es ist von der Draufsicht zunächst der Dehnungskörper 12 aus dem Silikon 1 gezeigt. Randseitig ist der Dehnungskörper 12 mit der Oberfläche 2 des Thermoplasten 3 fest verbunden, was auch deutlich wird, wenn man die Teilansicht b) mit der Teilansicht c) vergleicht. In der Teilansicht b) ist der Mediendosierer 13 noch nicht unter Druck gesetzt, und in der Teilansicht c) wird über die Ventileinheit 16 ein Medium in eine sich bildende Kammer 17 eingebracht, die dadurch entsteht, dass sich der Dehnungskörper 12 dehnt. So kann der Dehnungskörper 12 in einen Dehnungsabschnitt 12a und einen Verbindungsabschnitt 12b unterteilt werden, und der Dehnungsabschnitt 12a öffnet die Kammer 17 bei Einführung eines Mediums durch die Öffnung 15 und die Ventileinheit 16 in die Kammer 17, während der Verbindungsabschnitt 12b des Dehnungskörpers 12 fest mit der Oberfläche 2 des Thermoplasten 3 verbunden ist und die Kammer 17 außenseitig bzw. radial umlaufend abdichtet.

Durch eine gezielte Bestrahlung der Oberfläche 2 können mit dem vorstehend beschriebenen Verfahren die beiden Abschnitte 12a und 12b voneinander getrennt werden, was besonders einfach dadurch erfolgen kann, dass der randseitige Abschnitt zur Bildung des Verbindungsabschnittes 12b nicht bestrahlt wird, insofern also keine Inaktivierung der chemischen Gruppen auf der Oberfläche 2 des Thermoplasten 3 stattfindet, und der Bereich der Oberfläche 2 unterhalb des Dehnungsabschnittes 12, der sich von der Oberfläche 2 abheben können soll, wird bestrahlt. Derartige Mediendosierer 13 funktionieren auf der Grundlage der Druckbeaufschlagung der Kammer 17 mit einem Druck, der durch die Dehnung des Dehnungsabschnittes 12a erzeugt wird, und die Ventileinheit 16 ist insofern lediglich vereinfacht gezeigt, da die Ventileinheit 16 auch mit einer Dosieröffnung, insbesondere Drossel, baueinheitlich ausgeführt sein kann, um das Medium aus dem Mediendosierer 13, beispielsweise für medizinische Zwecke, mit bestimmten Volumina pro Zeit aus der Kammer 17 austreten zu lassen.

Die Erfindung beschränkt sich in ihrer Ausführung nicht auf das vorstehend angegebene bevorzugte Ausführungsbeispiel. Vielmehr ist eine Anzahl von Varianten denkbar, welche von der dargestellten Lösung auch bei grundsätzlich anders gearteten Ausführungen Gebrauch macht.

### Bezugszeichenliste:

- 1: Silikon
- 2: Oberfläche
- 3: Thermoplast
- 4: UV-C-Strahlung
- 5: Maske
- 6: Strahlungsquelle
- 7: Ozon
- 8: formstabiler Grundkörper
- 9: flexibler Ventilkörper
- 9a: Verschlussabschnitt
- 9b: Verbindungsabschnitt
- 10: Ventil
- 11: formstabiler Grundkörper
- 12: Dehnungskörper
- 12a: Dehnungsabschnitt
- 12b: Verbindungsabschnitt
- 13: Mediendosierer
- 14: Bestrahlungskammer
- 15: Öffnung
- 16: Ventileinheit
- 17: Medienkammer
- 18: Hälfte eines Spritzgusswerkzeugs
- 19: haubenartiger Teil

- 100: Verbundbauteil

## Patentansprüche

1. Verfahren zur Beeinflussung der Haftung von Silikon (1) auf der Oberfläche (2) eines Thermoplasten (3), wobei das Verfahren wenigstens die folgenden Schritte aufweist:
- lokales Bestrahlen der Oberfläche (2) mit UV-Strahlung (4), wodurch chemische Gruppen des Thermoplasten (3) von einem aktiven Zustand in einen inaktiven Zustand überführt werden durch:
- vollständige Absorption der UV-Strahlung vom Thermoplasten (3) innerhalb weniger Mikrometer in der Oberfläche (2), wobei die Photonenenergie der UV-Strahlung größer als die atomaren Bindungsenergien im Thermoplasten (3) ist,
- Photodegradation in der Oberfläche (2) des Thermoplasten (3) und
- Verringerung der molaren Masse der Randschicht des Thermoplasten (3), und wobei folgende weitere Schritte vorgesehen sind:
- Aufbringen des Silikons (1) auf die Oberfläche (2), wobei
a) in den Bereichen der Bestrahlung keine Anhaftung des Silikons (1) auf der Oberfläche (2) erfolgt und
b) in den Bereichen ohne Bestrahlung eine Anhaftung des Silikons (1) auf der Oberfläche (2) erfolgt,
sodass in den bestrahlten Bereichen eine Nicht-Haftung von Silikon (1) auf der Oberfläche (2) des Thermoplasten (3) aufgrund einer Delamination des Silikons (1) mit der Oberfläche (2) des Thermoplasten (3) erzeugt wird.

2. Verfahren nach Anspruch 1, **dadurch gekennzeichnet,**
**dass** der Thermoplast (3) eine Spezifikation mit aktiven chemischen Gruppen aufweist, wobei die aktiven chemischen Gruppen mittels der UV-Bestrahlung inaktiviert werden.

3. Verfahren nach Anspruch 1, **dadurch gekennzeichnet,**
**dass** auf der Oberfläche (2) des Thermoplast (3) eine Maske (5) angeordnet wird, die Bereiche (I) aufweist, in denen die UV-Strahlung (4) passieren kann und die Oberfläche (2) bestrahlt und die Bereiche (II) aufweist, in denen die UV-Strahlung (4) auf der Oberfläche (2) abgeschattet wird.

4. Verfahren nach Anspruch 1 oder 2, **dadurch gekennzeichnet, dass** die UV-Strahlung mittels einer Strahlungsquelle (6) erzeugt wird, die während der Bestrahlung über der Oberfläche (2) des Thermoplasten (3) bewegt wird und die Bereiche bestrahlt, in denen die chemischen Gruppen auf der Oberfläche (2) des Thermoplasten (3) inaktiviert werden sollen.

5. Verfahren nach einem der Ansprüche 1 bis 3, **dadurch gekennzeichnet, dass** die Bestrahlung der Oberfläche (2) des Thermoplasten (3) innerhalb einer nach außen abgedunkelten Bestrahlungskammer (14) ausgeführt wird, sodass bei der Bestrahlung der Oberfläche (2) des Thermoplasten (3) sich bildendes Ozon (7) währen der Bestrahlung mit der Oberfläche (2) wechselwirkt.

6. Verfahren nach einem der vorgenannten Ansprüche, **dadurch gekennzeichnet, dass** die Bestrahlung der Oberfläche (2) des Thermoplasten (3) mit UV-C Strahlung ausgeführt wird, insbesondere aufweisend eine Wellenlänge im Bereich von 100nm bis 280nm.

7. Verfahren nach einem der vorgenannten Ansprüche, **dadurch gekennzeichnet, dass** die Bestrahlung der Oberfläche (2) des Thermoplasten (3) mit UV-C Strahlung mit einer Dauer im Bereich von 1s bis 3600s ausgeführt wird.

8. Verfahren nach einem der vorgenannten Ansprüche,
**dadurch gekennzeichnet, dass** als Thermoplast (3) ein Polyamid, PBT, PMMA, PET, PVC, PS, PP oder ein PE bereitgestellt wird und/oder dass als Silikon (1) ein Liquid Silicone Rubber oder ein High Consistency Silicone Rubber bereitgestellt wird.

9. Verfahren nach einem der vorgenannten Ansprüche, **dadurch gekennzeichnet, dass** das Silikon (1) im Spritzgießverfahren, im Extrusionsverfahren oder im Transfer-Molding Verfahren auf die lokal bestrahlte Oberfläche (2) des Thermoplasten (3) aufgebracht wird.

10. Verbundbauteil (100) aus einem Thermoplasten (3) und einem auf einer Oberfläche (2) des Thermoplasten (3) angeordneten Silikons (1), wobei die Oberfläche (2) mit einem Verfahren gemäß einem der Ansprüche 1 bis 9 lokal deaktiviert wurde, sodass in den bestrahlten Bereichen eine Nicht-Haftung von Silikon (1) auf der Oberfläche (2) des Thermoplasten (3) aufgrund einer Delamination des Silikons (1) mit der Oberfläche (2) des Thermoplasten (3) gebildet ist.

11. Verbundbauteil (100) nach Anspruch 10, **dadurch gekennzeichnet, dass** das Verbundbauteil (100) ein Ventil (10) bildet, wobei der Thermoplast (3) einen formstabilen Grundkörper (8) und das Silikon (1) einen flexiblen Ventilkörper (9) des Ventils (10) bildet, wobei der flexible Ventilkörper (9) mit dem Grundkörper (8) im Bereich a), in dem durch Bestrahlung die Oberfläche (2) des Grundkörpers (8) keine Anhaftung aufweist, einen beweglichen Verschlussabschnitt (9a) des Ventils (10) bildet und im Bereich b), in dem ohne Bestrahlung eine Anhaftung des Ventilkörper (9) auf der Oberfläche (2) des Grundkörpers (8) erfolgt, der flexible Ventilkörper (9) einen Verbindungsabschnitt (9b) mit dem Grundkörper (8) bildet.

12. Verbundbauteil (100) nach Anspruch 10, **dadurch gekennzeichnet, dass** das Verbundbauteil (100) einen Mediendosierer (13) bildet, wobei der Thermoplast (3) einen formstabilen Grundkörper (11) und das Silikon (1) einen flexiblen Dehnungskörper (12) des Mediendosierers (13) bildet, wobei der flexible Dehnungskörper (12) mit dem Grundkörper (11) im Bereich a), in dem durch Bestrahlung die Oberfläche (2) des Grundkörpers (8) keine Anhaftung des Dehnungskörper (12) aufweist, einen Dehnungsabschnitt (12a) bildet und im Bereich b), in dem ohne Bestrahlung eine Anhaftung des Dehnungskörpers (12) auf der Oberfläche (2) des Grundkörpers (11) erfolgt, der flexible Dehnungskörper (12) einen Verbindungsabschnitt (12b) mit dem Grundkörper (11) bildet.

## Claims

1. Method for influencing the adhesion of silicone (1) to the surface (2) of a thermoplastic (3), wherein the method comprises at least the steps of:
- local irradiation of the surface (2) with UV radiation (4), whereby chemical groups of the thermoplastic (3) are converted from an active state to an inactive state by:
- complete absorption of the UV radiation by the thermoplastic (3) within a few micrometers into the surface (2), wherein the photon energy of the UV radiation is greater than the atomic binding energies in the thermoplastic (3),
- photodegradation in the surface (2) of the thermoplastic (3), and
- reduction of the molar mass of the boundary layer of the thermoplastic (3), and wherein following further steps are provided:
- application of the silicone (1) onto the surface (2), wherein
a) in the areas of irradiation, no adhesion of the silicone (1) to the surface (2) occurs, and
b) in the areas without irradiation, adhesion of the silicone (1) to the surface (2) occurs,
so that in the irradiated areas, a non-adhesion of the silicone (1) to the surface (2) of the thermoplastic (3) is generated due to a delamination of the silicone (1) from the surface (2) of the thermoplastic (3).

2. Method according to claim 1, **characterized in that** the thermoplastic (3) comprises a specification with active chemical groups, wherein the active chemical groups are inactivated by means of the UV irradiation.

3. Method according to claim 1, **characterized in that** a mask (5) is arranged on the surface (2) of the thermoplastic (3), which comprises areas (I) in which the UV radiation (4) can pass through and irradiate the surface (2), and comprises areas (II) in which the UV radiation (4) is shielded from the surface (2).

4. Method according to claim 1 or 2, **characterized in that** the UV radiation is generated by means of a radiation source (6), which is moved over the surface (2) of the thermoplastic (3) during irradiation and irradiates areas in which the chemical groups on the surface (2) of the thermoplastic (3) are to be inactivated.

5. Method according to any one of claims 1 to 3, **characterized in that** the irradiation of the surface (2) of the thermoplastic (3) is carried out within an externally darkened irradiation chamber (14), so that ozone (7) formed during the irradiation of the surface (2) of the thermoplastic (3) interacts with the surface (2).

6. Method according to any one of the aforementioned claims, **characterized in that** the irradiation of the surface (2) of the thermoplastic (3) is carried out with UV-C radiation, particularly comprising a wavelength in the range of 100 nm to 280 nm.

7. Method according to any one of the aforementioned claims, **characterized in that** the irradiation of the surface (2) of the thermoplastic (3) with UV-C radiation is carried out for a duration in the range of 1 s to 3600 s.

8. Method according to any one of the aforementioned claims, **characterized in that** the thermoplastic (3) is provided as a polyamide, PBT, PMMA, PET, PVC, PS, PP or a PE and/or that the silicone (1) is provided as a liquid silicone rubber or a high consistency silicone rubber.

9. Method according to any one of the aforementioned claims, **characterized in that** the silicone (1) is applied to the locally irradiated surface (2) of the thermoplastic (3) by injection molding, extrusion, or transfer molding process.

10. Composite component (100) of a thermoplastic (3) and a silicone (1) arranged on a surface (2) of the thermoplastic (3), wherein the surface (2) was locally deactivated by a method according to any one of claims 1 to 9, so that in the irradiated areas a non-adhesion of the silicone (1) to the surface (2) of the thermoplastic (3) is formed due to a delamination of the silicone (1) from the surface (2) of the thermoplastic (3).

11. Composite component (100) according to claim 10, **characterized in that** the composite component (100) forms a valve (10), wherein the thermoplastic (3) forms a dimensionally stable base body (8) and the silicone (1) forms a flexible valve body (9) of the valve (10), wherein the flexible valve body (9) forms with the base body in area a), in which the surface (2) of the base body (8) comprises no adhesion due to irradiation, a movable closure section (9a) of the valve (10) and in area b), in which adhesion of the valve body (9) to the surface (2) of the base body (8) occurs without irradiation, the flexible valve body (9) forms a connection section (9b) with the base body (8).

12. Composite component (100) according to claim 10, **characterized in that** the composite component (100) forms a media dispenser (13), wherein the thermoplastic (3) forms a dimensionally stable base body (11) and the silicone (1) forms a flexible expansion body (12) of the media dispenser (13), wherein the flexible expansion body (12) forms with the base body in area a), in which the surface (2) of the base body (11) comprises no adhesion of the expansion body (12) due to irradiation, an expansion section (12a) and in area b), in which adhesion of the expansion body (12) to the surface (2) of the base body (11) occurs without irradiation, the flexible expansion body (12) forms a connection section (12b) with the base body (11).

## Revendications

1. Procédé pour modifier l'adhérence du silicone (1) sur la surface (2) d'un thermoplastique (3), le procédé comprenant au moins les étapes suivantes :
- irradiation locale de la surface (2) avec un rayonnement UV (4), par lequel des groupes fonctionnels du thermoplastique (3) sont transformés d'un état actif à un état inactif par :
- absorption complète du rayonnement UV par le thermoplastique (3) dans quelques micromètres de la surface (2), l'énergie photonique du rayonnement UV étant supérieure aux énergies de liaison atomique dans le thermoplastique (3),
- photodégradation dans la surface (2) du thermoplastique (3) et
- réduction de la masse molaire de la couche superficielle du thermoplastique (3), et le procédé comprenant en outre les étapes suivantes :
- application du silicone (1) sur la surface (2), où
a) dans les zones d'irradiation, aucune adhérence du silicone (1) sur la surface (2) ne se produit et
b) dans les zones sans irradiation, une adhérence du silicone (1) sur la surface (2) se produit,
de sorte que dans les zones irradiées, une non-adhérence du silicone (1) sur la surface (2) du thermoplastique (3) est créée en raison d'une délamination du silicone (1) avec la surface (2) du thermoplastique (3).

2. Procédé selon la revendication 1, **caractérisé en ce que** le thermoplastique (3) présente une spécification avec des groupes fonctionnels actifs, les groupes fonctionnels actifs étant inactivés au moyen de l'irradiation UV.

3. Procédé selon la revendication 1, **caractérisé en ce qu'**un masque (5) est disposé sur la surface (2) du thermoplastique (3), lequel masque comprend des zones (I) où le rayonnement UV (4) peut passer et irradie la surface (2) et des zones (II) où le rayonnement UV (4) est ombragé sur la surface (2).

4. Procédé selon la revendication 1 ou 2, **caractérisé en ce que** le rayonnement UV est généré au moyen d'une source de rayonnement (6) qui est déplacée au-dessus de la surface (2) du thermoplastique (3) pendant l'irradiation et qui irradie les zones dans lesquelles les groupes fonctionnels sur la surface (2) du thermoplastique (3) doivent être inactivés.

5. Procédé selon l'une des revendications 1 à 3, **caractérisé en ce que** l'irradiation de la surface (2) du thermoplastique (3) est effectuée à l'intérieur d'une chambre d'irradiation (14) assombrie vers l'extérieur, de sorte que l'ozone (7) formé lors de l'irradiation de la surface (2) du thermoplastique (3) interagit avec la surface (2) pendant l'irradiation.

6. Procédé selon l'une des revendications précédentes, **caractérisé en ce que** l'irradiation de la surface (2) du thermoplastique (3) est effectuée avec un rayonnement UV-C, comprenant notamment une longueur d'onde dans la plage de 100 nm à 280 nm.

7. Procédé selon l'une des revendications précédentes, **caractérisé en ce que** l'irradiation de la surface (2) du thermoplastique (3) avec un rayonnement UV-C est effectuée avec une durée dans la plage de 1 s à 3600 s.

8. Procédé selon l'une des revendications précédentes, **caractérisé en ce que** le thermoplastique (3) utilisé est un polyamide, PBT, PMMA, PET, PVC, PS, PP ou un PE et/ou que le silicone (1) utilisé est un caoutchouc de silicone liquide ou un caoutchouc de silicone à haute consistance.

9. Procédé selon l'une des revendications précédentes, **caractérisé en ce que** le silicone (1) est moulé sur la surface (2) localement irradiée du thermoplastique (3) par moulage par injection, par procédé d'extrusion ou par procédé de moulage par transfert.

10. Composant composite (100) constitué d'un thermoplastique (3) et d'un silicone (1) disposé sur une surface (2) du thermoplastique (3), la surface (2) ayant été localement désactivée par un procédé selon l'une des revendications 1 à 9, de sorte que dans les zones irradiées, une non-adhérence du silicone (1) sur la surface (2) du thermoplastique (3) est formée en raison d'une délamination du silicone (1) avec la surface (2) du thermoplastique (3).

11. Composant composite (100) selon la revendication 10, **caractérisé en ce que** le composant composite (100) forme une valve (10), le thermoplastique (3) formant un corps de base (8) dimensionnellement stable et le silicone (1) formant un corps de valve (9) flexible de la valve (10), le corps de valve flexible (9) formant avec le corps de base (8) dans la zone a), où par irradiation la surface (2) du corps de base (8) ne présente pas d'adhérence, une section de fermeture mobile (9a) de la valve (10), et dans la zone b), où sans irradiation une adhérence du corps de valve (9) se produit sur la surface (2) du corps de base (8), le corps de valve flexible (9) formant une section de connexion (9b) avec le corps de base (8).

12. Composant composite (100) selon la revendication 10, **caractérisé en ce que** le composant composite (100) forme un doseur de fluide (13), le thermoplastique (3) formant un corps de base (11) dimensionnellement stable et le silicone (1) formant un corps d'expansion flexible (12) du doseur de fluide (13), le corps d'expansion flexible (12) formant avec le corps de base (11) dans la zone a), où par irradiation la surface (2) du corps de base (8) ne présente pas d'adhérence du corps d'expansion (12), une section d'expansion (12a), et dans la zone b), où sans irradiation une adhérence du corps d'expansion (12) se produit sur la surface (2) du corps de base (11), le corps d'expansion flexible (12) formant une section de connexion (12b) avec le corps de base (11).
